# NEUE EUROPÄISCHE PATENTSCHRIFT

(11) **EP 2 303 659 B2**
(45) Veröffentlichungstag und Bekanntmachung des Hinweises auf die Entscheidung über den Einspruch: **28.11.2018**
(45) Hinweis auf die Patenterteilung: 24.07.2013
(21) Anmeldenummer: 09765464.4
(22) Anmeldetag: 27.02.2009
(51) Int. Cl.: B60T 17/00, F16L 55/02

(54) **GERÄUSCHDÄMPFER FÜR DRUCKLUFTSYSTEME VON FAHRZEUGEN**
SOUND DAMPER FOR COMPRESSED AIR SYSTEMS OF VEHICLES
AMORTISSEUR DE BRUIT POUR SYSTÈMES À AIR COMPRIMÉ DE VÉHICULES

(30) Priorität: 20.06.2008 DE 102008029489
(43) Veröffentlichungstag der Anmeldung: 06.04.2011
(73) Patentinhaber: WABCO GmbH, 30453 Hannover (DE)
(72) Erfinder: HARTING, Hendrik, 31785 Hameln (DE); KÖNIG, Heinz-Werner, 30890 Barsinghausen (DE); MÜLLER, Thomas, 30655 Hannover (DE); RIEDIGER-JANISCH, Karl-Heinz, 30455 Hannover (DE)
(74) Vertreter: Lauerwald, Jörg
(86) Internationale Anmeldenummer: PCT/EP2009/001400
(87) Internationale Veröffentlichungsnummer: WO 2009/152884

(56) Entgegenhaltungen:
- EP-A- 0 019 855
- EP-A- 0 132 696
- EP-A- 0 565 136
- EP-B1- 0 132 696
- EP-B1- 0 359 948
- EP-B1- 0 596 220
- WO-A-00/26074
- WO-A1-00/75495
- CA-A- 331 407
- DE-A1- 2 932 777
- DE-A1- 3 015 383
- DE-A1- 10 248 183
- DE-U1-202004 011 630
- GB-A- 686 905
- US-A- 1 891 170
- US-A1- 2006 162 994

## Beschreibung

Die Erfindung betrifft einen Geräuschdämpfer für Druckluftsysteme von Fahrzeugen, umfassend ein Gehäuse und ein Dämmmittel, wobei das Gehäuse einen Lufteinlass und einen Luftauslass aufweist, und das Dämmmittel innerhalb des Gehäuses angeordnet ist, so dass vom Lufteinlass zum Luftauslass durch das Gehäuse strömende Luft durch das Dämmmittel strömt und auf diese Weise eine Geräuschdämpfung erzielt wird.

Solche Geräuschdämpfer eignen sich insbesondere für die Verwendung in einer Entlüftung des Druckluftsystems, um die Geräusche, die beim Entlüften des Druckluftsystems erzeugt werden, zu dämpfen.

Geräuschdämpfer dieser Art offenbaren beispielsweise die DE 102 48 183 A1, EP 0132696 A2 und die DE 20 2004 011 630 U1.

Nachteil derartiger bekannter Geräuschdämpfer ist, dass die Möglichkeit besteht, dass zumindest ein Teil des Luftstromes an dem Dämmmittel vorbeiströmt bzw. es unterströmt, wodurch die Dämpfungseigenschaften des Geräuschdämpfers vermindert sind.

Aufgabe der vorliegenden Erfindung ist es deswegen, einen Geräuschdämpfer zu schaffen, der für eine effektive Leitung des Luftstromes durch das Dämmmittel des Geräuschdämpfers sorgt.

Diese Aufgabe wird durch einen Geräuschdämpfer gemäß dem unabhängigen Anspruch 1 gelöst.

Vorteilhafte Weiterbildungen sind Gegenstände der abhängigen Ansprüche.

Der erfindungsgemäße Geräuschdämpfer umfasst ein Gehäuse, ein Dämmmittel und zumindest einen Steg, wobei das Gehäuse einen Lufteinlass und einen Luftauslass aufweist, das Dämmmittel innerhalb des Gehäuses angeordnet ist, und der mindestens eine Steg innerhalb des Gehäuses so angeordnet ist, dass er in das Dämmmittel zumindest teilweise hineinragt, und vom Lufteinlass zum Luftauslass durch das Gehäuse strömende Luft von dem mindestens einen Steg in das Dämmmittel geleitet wird.

Der Begriff "hineinragen" ist in diesem Zusammenhang so zu verstehen, dass zumindest in dem Teilabschnitt, in dem der Steg in das Dämmmittel hineinragt, das Dämmmittel beidseitig an den gegenüberliegenden Seitenflächen des Steges angrenzt. Vorzugsweise grenzt die gesamte Außenfläche des in das Dämmmittel hineinragenden Teilabschnitts des Steges an das Dämmmittel.

Der mindestens eine Steg gewährleistet, dass der Luftstrom das Dämmmittel möglichst effektiv durchströmt, insbesondere ein Teil des Luftstromes nicht das Dämmmittel unterströmt. Die Ausbildung des Steges, insbesondere die Höhe und/oder der Durchmesser, kann allerdings je nach Aufbau des Geräuschdämpfers variieren.

Der mindestens eine Steg ist einteilig mit dem Gehäuse ausgebildet. Das Gehäuse ist aus Deckel und Boden zusammengesetzt, wobei der mindestens eine Steg an dem Boden und an dem Deckel angeformt ist. In diesem Falle ist der Steg einteilig mit dem Gehäuse ausgebildet. Dies ist kostengünstig.

Erfindungsgemäß umschließt ein erster Steg den Lufteinlass und/oder ein zweiter Steg den Luftauslass.

Mit einer derartigen Anordnung muss die Luft auf dem Weg vom Einlass zum Auslass den ersten Steg und den zweiten Steg umströmen. Auf diese Weise wird der Luftstrom effektiv in das Dämmmittel geleitet. Grundsätzlich ist auch möglich, dass Einlass und Auslass nur bereichsweise von einem Steg umschlossen werden, so dass nur ein Teil des Luftstromes durch den Steg geführt wird.

Das Gehäuse und der mindestens eine Steg ist um eine gemeinsame Achse radial symmetrisch ausgebildet. Grundsätzlich sind natürlich auch andere Formen möglich, insbesondere ovale oder rechteckförmige Formen.

Das Dämmmittel enthält eine Gestrickrolle aus einem um eine Achse gewickelten Gestrick. Grundsätzlich lässt sich die Erfindung auch mit anderen Dämmmitteln einsetzen. Insbesondere können mehrere Dämmmaterialien vorgesehen sein.

Die Gestrickrolle und der mindestens eine Steg ist zueinander parallel verlaufend angeordnet. Dies erleichtert die Anordnung von Steg und Gestrickrolle, insbesondere die Montage, da der Steg einen oder mehrere Ringe der Gestrickrolle weg- bzw. zusammendrücken kann. Erfindungsgemäß verlaufen sämtliche Stege derart parallel. Erfindungsgemäß sind der mindestens eine Steg, das Gehäuse und die Gestrickrolle entlang einer gemeinsamen Symmetrieachse angeordnet, wobei Steg und Gehäuse radial symmetrisch ausgebildet sind. Dies ermöglicht eine sehr kompakte Form des Geräuschdämpfers.

Vorzugsweise ist der mindestens eine Steg an seinem in das Dämmmittel hineinragendem Ende verjüngt. Hierdurch wird das Einführen des Steges in das Dämmmittel im Rahmen der Montage erleichtert. Grundsätzlich sind aber auch andere Formen möglich, beispielsweise eine abgerundete, gezackte, gerade oder wellige Form.

Vorzugsweise weist der mindestens eine Steg im Bereich seines in das Dämmmittel hineinragenden Endes eine oder mehrere Notpassagen für den Durchtritt von Luft auf. Derartige Notpassagen werden vorzugsweise durch geometrische Öffnungen auf der Stegkante gebildet, wobei die Öffnungen derart ausgebildet sind, dass, wenn der Geräuschdämpfer vereist ist, diese durch Beaufschlagung mit einem Staudruck ausgebrochen werden, und so einen Kanal für den Luftstrom freigeben.

Erfindungsgemäß ist eine Vielzahl von schmalen, länglichen Entlüftungsschlitzen vorgesehen, um insbesondere ein schnelles Entlüften zu ermöglichen.

Vorzugsweise weist der Geräuschdämpfer ein Siebelement auf, das im Bereich des Lufteinlasses angeordnet ist. Ein derartiges Siebelement dient zur Drosselung des Luftstromes vor dem Eintritt in das Dämmmittel. Das Siebelement kann ein vom Gehäuse unabhängiges Element sein, oder aber mit diesem einstückig oder einteilig ausgebildet sein.

Gehäuse, Steg und Siebelement bestehen vorzugsweise aus Kunststoff. Grundsätzlich sind auch andere Materialen einsetzbar, beispielsweise Metall, insbesondere Aluminium, oder aber auch Materialkombinationen.

Die Erfindung wird nun anhand eines Ausführungsbeispieles, welches durch eine Figur dargestellt ist, näher erläutert.

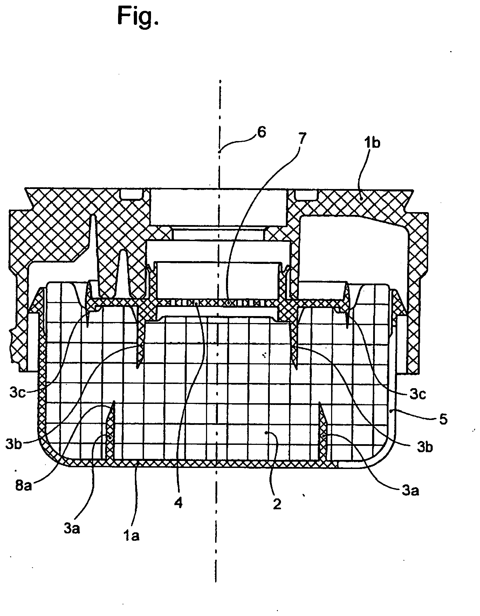

Die Figur zeigt eine Ansicht eines teilweise aufgeschnittenen erfindungsgemäßen Geräuschdämpfers für Druckluftsysteme von Fahrzeugen. In diesem Fall ist der Geräuschdämpfer in der Entlüftung des Druckluftsystems angeordnet, um das Entlüftungsgeräusch beim Entlüften des Druckluftsystems zu dämpfen.

Der Geräuschdämpfer umfasst ein Gehäuse, ein Dämmmittel 2 und drei Stege 3a, 3b, 3c. Das Gehäuse ist zweiteilig aus einem Deckel 1a und einem Boden 1 b aufgebaut. Im Boden 1b befindet sich ein Lufteinlass 4, im Deckel 1a ein Luftauslass 5.

Das Dämmmittel 2 ist innerhalb des Gehäuses 1a, 1b angeordnet. Die drei Stege 3a, 3b, 3c sind innerhalb des Gehäuses 1a, 1 b so angeordnet, dass diese in das Dämmmittel hineinragen, und vom Lufteinlass zum Luftauslass durch das Gehäuse 1a, 1b strömende Luft von den Stegen 3a, 3b, 3c in das Dämmmittel geleitet wird.

Die Stege 3a, 3b, 3c sind einstückig mit dem Gehäuse 1a, 1b ausgebildet Der Steg 3a ist einteilig mit dem Deckel 1 a ausgebildet, die Stege 3b und 3c einteilig mit dem Boden 1 b.

Das Gehäuse 1a, 1b und die Stege 3a, 3b, 3c sind um eine gemeinsame Symmetrieachse 6 radial symmetrisch ausgebildet. Der Deckel 1a des Gehäuses weist im Wesentlichen eine Topfform auf, der Boden 1b des Gehäuses ist im Wesentlichen eben. Der Lufteinlass 4 ist als kreisförmige Öffnung ebenfalls mit der Achse 6 als Symmetrieachse im Boden 1 b ausgebildet. (Alternativ könnte der Lufteinlass 4 auch zur Achse 6 versetzt ausgebildete sein). Diese kreisförmige Öffnung wird an ihrem Rand durch den ringförmigen zweiten Steg 3b, der in das Innere des Gehäuses hineinragt, vollständig umschlossen.

Der Luftauslass 5 wird durch eine Vielzahl von schmalen, länglichen Entlüftungsschlitzen gebildet, die radial zur Symmetrieachse 6 verlaufend angeordnet sind, und die im Randbereich des Bodens des Gehäusedeckels 1a beginnen und sich über einen Großteil der Deckelaußenfläche erstrecken. Die Entlüftungsschlitze 5 werden durch den ersten Steg 3a radial vollständig umschlossen, wobei der Steg 3a als Ring am Boden des Gehäusedeckels 1a ausgebildet ist, der an dem Anfang der Entlüftungsschlitze 5 angrenzt, und in das Gehäuseinnere hineinragt.

Der dritte Steg 3c ist am Rand des Gehäusedeckels 1b, dessen Durchmesser etwas kleiner ist als der Innendurchmesser des Gehäusedeckels 1a, ausgebildet. Der dritte Steg 3c ragt ebenfalls in das Gehäuseinnere hinein.

Der Lufteinlass 4 wird durch ein Siebelement 7 vollständig abgedeckt. Das Siebelement 7 weist eine Vielzahl von kreisförmigen durchgehenden Öffnungen auf. Zweck ist die Drosselung des Luftstromes des Druckluftsystems beim Entlüften. Über das Siebelement 7 ist der Geräuschdämpfer mit der Entlüftung des Druckluftsystems verbunden. Eine Ausbildung des Geräuschdämpfers ohne Siebelement ist ebenfalls möglich.

Das Dämmmittel 2 ist eine Gestrickrolle aus einem um eine Achse gewickelten Gestrick aus thermoplastischen Fäden. Alternativ wäre als Material insbesondere auch Metall möglich. Die Gestrickrolle 2 und die Stege 3a, 3b, 3c sind zueinander parallel verlaufend angeordnet, die Achse 6 ist somit gemeinsame Symmetrieachse.

Die Stege 3a, 3b, 3c sind an ihrem in das Dämmmittel 2 hineinragenden Ende, siehe beispielsweise das Ende 8a, verjüngt. Des Weiteren weisen die Stege 3a, 3b, 3c an der Kante des in das Dämmmittel 2 hineinragenden Endes mehrere Notpassagen für den Durchtritt von Luft auf (nicht gezeigt).

Der Durchmesser des radial symmetrisch ausgebildeten zweiten Stegs 3b ist etwas kleiner als der Durchmesser des radial symmetrisch ausgebildeten ersten Stegs 3a. Erster Steg 3a und zweiter Steg 3b ragen dabei tief in das Dämmmittel 2 hinein, überdecken sich aber nicht in ihrer Höhe. Durch diese Anordnung des ersten Stegs 3a und des zweiten Stegs 3b ist ein Luftstrom gezwungen, den zweiten Steg 3b zu umströmen, die schmale Passage zwischen den Enden des ersten Stegs 3a und des zweiten Stegs 3b zu passieren, und den ersten Steg 3a zu umströmen, um vom Lufteinlass 4 zum Luftauslass 5 zu gelangen. Auf diese Weise wird bewirkt, dass ein Luftstrom effektiv durch das Dämmmittel 2 geleitet wird. Der dritte Steg 3c, der einen Durchmesser aufweist, der größer ist als der Durchmesser des ringförmigen Steges 3a, trägt dazu bei, dass der Luftstrom in Richtung Entlüftungsschlitze 5 durch das Dämmmittel 2 geleitet wird.

Gehäuse 1a, 1 b, Stege 3a, 3b, 3c und Siebelement 7 sind aus Kunststoff, in diesem Falle aus Polyamid, hergestellt.

## Patentansprüche

1. Geräuschdämpfer für Druckluftsysteme von Fahrzeugen, umfassend ein Gehäuse (1a, 1b), ein Dämmmittel (2) und zumindest einen Steg (3a, 3b, 3c), wobei das Gehäuse (1a, 1b) einen Lufteinlass (4) und einen Luftauslass (5) aufweist, das Dämmmittel (2) innerhalb des Gehäuses (1a, 1b) angeordnet ist, die vom Lufteinlass (4) zum Luftauslass (5) durch das Gehäuse (1a, 1b) strömende Luft von dem mindestens eine Steg (3a, 3b, 3c) in das Dämmmittel (2) geleitet wird, **dadurch gekennzeichnet, dass** der mindestens eine Steg (3a, 3b, 3c) innerhalb des Gehäuses (1a, 1b) so angeordnet ist, dass er in das Dämmmittel (2) zumindest teilweise hineinragt, und wobei der mindestens eine Steg (3a, 3b, 3c) einteilig mit dem Gehäuse (1a, 7) ausgebildet ist, wobei das Dämmmittel (2) eine Gestrickrolle (2) aus einem um eine Achse gewickelten Gestrick enthält, wobei Gestrickrolle (2) und der mindestens eine Steg (3a, 3b, 3c) zueinander parallel verlaufend angeordnet sind, und dass das Gehäuse (1a, 1b) zweiteilig aus einem Deckel (1a) und aus einem Boden (1b) aufgebaut ist, wobei sich im Boden (1b) der Lufteinlass (4) und im Deckel (1a) der Luftauslass (5) befindet, und dass das Gehäuse (1a, 1b) und der mindestens eine Steg (3a, 3b, 3c) um eine gemeinsame Achse (6) radialsymmetrisch ausgebildet sind, wobei der Luftauslass (5) durch eine Vielzahl von schmalen, länglichen Entlüftungsschlitzen gebildet wird, welche radial zur gemeinsamen Achse (6) verlaufend angeordnet sind und die im Randbereich des Bodens des Gehäusedeckels (1a) beginnen und sich über einen Großteil der Deckelaußenfläche erstrecken, und dass ein erster Steg (3a) den Luftauslass (5) umschließt und ein zweiter Steg (3b) den Lufteinlass (4) umschließt.

2. Geräuschdämpfer nach Anspruch 1, **dadurch gekennzeichnet, dass** der mindestens eine Steg (3a, 3b, 3c) sich an seinem in das Dämmmittel (2) hineinragende Ende (8a) verjüngt.

3. Geräuschdämpfer nach einem der vorhergehenden Ansprüche, **dadurch gekennzeichnet, dass** der mindestens eine Steg (3a, 3b, 3c) im Bereich seines in das Dämmmittel (2) hineinragenden Endes eine oder mehrere Notpassagen für den Durchtritt von Luft aufweist.

4. Geräuschdämpfer nach einem der vorhergehenden Ansprüche, **dadurch gekennzeichnet, dass** der Luftauslass (5) zumindest einen Entlüftungsschlitz (5) umfasst.

5. Geräuschdämpfer nach einem der vorhergehenden Ansprüche, **dadurch gekennzeichnet, dass** der Geräuschdämpfer ein Siebelement (7) aufweist, das im Bereich des Lufteinlasses (4) angeordnet ist.

## Claims

1. Sound damper for compressed air systems of vehicles, which comprises a housing (1a, 1b), an insulating means (2) and at least one web (3a, 3b, 3c), the housing (1a, 1b) having an air inlet (4) and an air outlet (5), the insulating means (2) being arranged inside the housing (1a, 1b), the air which flows from the air inlet (4) to the air outlet (5) through the housing (1a, 1b) being conducted into the insulating means (2) by the at least one web (3a, 3b, 3c), **characterized in that** the at least one web (3a, 3b, 3c) is arranged inside the housing (1a, 1b) such that said web projects at least partially into the insulating means (2), and the at least one web (3a, 3b, 3c) being formed in one part with the housing (1a, 7, wherein the insulating means (2) contains a knitted roll (2) composed of a knit wound about an axis, wherein the knitted roll (2) and the at least one web (3a, 3b, 3c) are arranged so as to run parallel to one another and **in that** the housing (1a, 1b) is constructed in two parts from a cover (1a) and from a base (1b), wherein the air inlet (4) is situated in the base (1b) and the air outlet (5) is situated in the cover (la), and **in that** the housing (1a, 1b) and the at least one web (3a, 3b, 3c) are designed to be radially symmetrical about a common axis (6), wherein the air outlet (5) is formed by a multiplicity of narrow, elongate ventilation slots which are arranged so as to run radially with respect to the common axis (6) and which begin in the end region of the base of the housing cover (1a) and extend over a major part of the cover outer surface, and **in that** a first web (3a) surrounds the air outlet (5) and a second web (3b) surrounds the air inlet (4) .

2. Sound damper according to claim 1, **characterized in that** the at least one web (3a, 3b, 3c) tapers at its end (8a) projecting into the insulating means (2).

3. Sound damper according to one of the preceding claims, **characterized in that** the at least one web (3a, 3b, 3c) has, in the region of its end projecting into the insulating means (2), one or more emergency passages for the passage of air.

4. Sound damper according to one of the preceding claims, **characterized in that** the air outlet (5) comprises at least one venting slot (5).

5. Sound damper according to one of the preceding claims, **characterized in that** the sound damper has a screen element (7) which is arranged in the region of the air inlet (4).

## Revendications

1. Amortisseur de bruit pour systèmes à air comprimé de véhicules, comprenant un boîtier (1a, 1b), un moyen d'amortissement (2) et au moins une aile (3a, 3b, 3c), dans lequel le boîtier (1a, 1b) présente une entrée d'air (4) et une sortie d'air (5), le moyen d'amortissement (2) est disposé à l'intérieur du boîtier (1a, 1b), l'air circulant de l'entrée d'air (4) à la sortie d'air (5) à travers le boîtier (1a, 1b) est guidé par ladite au moins une aile (3a, 3b, 3c) dans le moyen d'amortissement (2), **caractérisé en ce que** ladite au moins une aile (3a, 3b, 3c) est disposée à l'intérieur du boîtier (1a, 1b) de telle manière qu'elle pénètre au moins partiellement dans le moyen d'amortissement (2), ladite au moins une aile (3a, 3b, 3c) étant réalisée d'une seule pièce avec le boîtier (1a, 7), le moyen d'amortissement (2) contenant un rouleau de tricot (2) en un tricot enroulé autour d'un axe, le rouleau de tricot (2) et ladite au moins une aile (3a, 3b, 3c) étant disposés parallèlement les uns aux autres, et **en ce que** le boîtier (1a, 1b) est réalisé en deux parties constituées d'un couvercle (1a) et d'un fond (1b), l'entrée d'air (4) se trouvant dans le fond (1b) et la sortie d'air (5) se trouvant dans le couvercle (1a), et **en ce que** le boîtier (1a, 1b) et ladite au moins une aile (3a, 3b, 3c) sont réalisés sous forme symétrique radiale autour d'un axe commun (6), la sortie d'air (5) étant formée par une pluralité de fentes d'échappement d'air étroites et allongées qui sont disposées de manière à s'étendre radialement par rapport à l'axe commun (6) et qui s'étendent sur une grande partie de la surface extérieure du couvercle, et **en ce qu'**une première aile (3a) entoure la sortie d'air (5) et une deuxième aile (3b) entoure l'entrée d'air (4) .

2. Amortisseur de bruit selon la revendication 1, **caractérisé en ce que** ladite au moins une aile (3a, 3b, 3c) s'amincit à son extrémité (8a) pénétrant dans le moyen d'amortissement (2).

3. Amortisseur de bruit selon l'une quelconque des revendications précédentes, **caractérisé en ce que** ladite au moins une aile (3a, 3b, 3c) présente, dans la région de son extrémité pénétrant dans le moyen d'amortissement (2), un ou plusieurs passages de secours pour le passage d'air.

4. Amortisseur de bruit selon l'une quelconque des revendications précédentes, **caractérisé en ce que** la sortie d'air (5) comprend au moins une fente d'échappement d'air (5).

5. Amortisseur de bruit selon l'une quelconque des revendications précédentes, **caractérisé en ce que** l'amortisseur de bruit présente un élément de tamis (7), qui est disposé dans la région de l'entrée d'air (4) .
